(19) Europäisches Patentamt
European Patent Office
Office européen des brevets

(11) **EP 1 896 893 B1**

(12) **EUROPÄISCHE PATENTSCHRIFT**

(45) Veröffentlichungstag und Bekanntmachung des Hinweises auf die Patenterteilung:
**14.08.2013  Patentblatt 2013/33**

(21) Anmeldenummer: **07725809.3**

(22) Anmeldetag: **04.06.2007**

(51) Int Cl.:
***G02B 27/09*** *(2006.01)*

(86) Internationale Anmeldenummer:
**PCT/EP2007/004941**

(87) Internationale Veröffentlichungsnummer:
**WO 2007/140969 (13.12.2007 Gazette 2007/50)**

(54) **VORRICHTUNG ZUR STRAHLFORMUNG**

APPARATUS FOR BEAM SHAPING

DISPOSITIF DE MISE EN FORME DE RAYON

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.06.2006   DE 102006026321**

(43) Veröffentlichungstag der Anmeldung:
**12.03.2008   Patentblatt 2008/11**

(73) Patentinhaber: **LIMO Patentverwaltung GmbH & Co. KG**
**44319 Dortmund (DE)**

(72) Erfinder:
• **LISSOTSCHENKO, Vitalij**
  **58730 Fröndenberg (DE)**
• **MIKHAILOV, Aleksei**
  **Sankt Petersburg, 197110 (RU)**
• **DARSHT, Maxim**
  **44319 Dortmund (DE)**
• **MIKLIAEV, Iouri**
  **Cheljabinsk, 454025 (RU)**

(74) Vertreter: **Brune, Axel**
**Fritz Patent- und Rechtsanwälte**
**Postfach 1580**
**59705 Arnsberg (DE)**

(56) Entgegenhaltungen:
EP-A- 1 528 425      EP-A- 1 617 275
EP-A1- 0 329 787     EP-A1- 1 006 382
WO-A-2004/100331     WO-A1-00/10049
US-A- 5 251 060      US-A- 5 513 201
US-A- 5 689 521      US-B1- 6 700 709

**Beschreibung**

Die vorliegende Erfindung betrifft eine Vorrichtung zur Strahlformung gemäß dem Oberbegriff des Anspruchs 1.

Definitionen: In Ausbreitungsrichtung der Laserstrahlung meint mittlere Ausbreitungsrichtung der Laserstrahlung, insbesondere wenn diese keine ebene Welle ist oder zumindest teilweise divergent ist. Mit Lichtstrahl, Teilstrahl oder Strahl ist, wenn nicht ausdrücklich anderes angegeben ist, kein idealisierter Strahl der geometrischen Optik gemeint, sondern ein realer Lichtstrahl, wie beispielsweise ein Laserstrahl mit einem Gauβ-Profil oder einem modifizierten Gauß-Profil, der keinen infinitesimal kleinen, sondern einen ausgedehnten Strahlquerschnitt aufweist.

Eine Vorrichtung der eingangs genannten Art ist aus der US 5,513,201 bekannt. Bei der in Fig. 53 der US 5,513,201 abgebildeten Ausführungsform wird ein Festkörperlaser, wie beispielsweise ein Nd-YAG-Laser von einem als Laserdiodenbarren ausgeführten Halbleiterlaser longitudinal gepumpt. Das Pumplicht des Halbleiterlasers wird hinsichtlich seiner Fast-Axis kollimiert und anschließend von Strahltransformationsmitteln um 90° gedreht, so dass die Divergenz der Slow-Axis und der Fast-Axis getauscht werden. Daran anschließend wird das Pumplicht auch hinsichtlich der nun um 90° gedrehten Slow-Axis kollimiert. Dieses vergleichsweise gut kollimierte Pumplicht wird endseitig in longitudinaler Richtung in das aktive Medium des Festkörperlasers eingestrahlt.

Weitere typische Laserlichtquellen sind beispielsweise Nd-YAG-Laser oder Excimer-Laser. Beispielsweise weisen nicht als Single-Mode-Laser betriebene Nd-YAG-Laser eine Beugungsmaßzahl (beam quality factor) $M^2$ von etwa 8 bis 25 auf. Die Beugungsmaßzahl $M^2$ ist ein Maß für die Qualität des Laserstrahls. Beispielsweise hat ein Laserstrahl mit einem reinen Gauß-Profil eine Beugungsmaßzahl $M^2$ von 1. Die Beugungsmaßzahl $M^2$ entspricht etwa der Anzahl der Moden der Laserstrahlung.

Die Beugungsmaßzahl $M^2$ hat Einfluss auf die Fokussierbarkeit der Laserstrahlung. Für einen Laserstrahl mit einem Gauß-Profil ist die Dicke d bzw. die Strahltaille im Fokusbereich proportional zu der Wellenlänge λ des zu fokussierenden Laserstrahls und umgekehrt proportional zu der numerischen Apertur NA der fokussierenden Linse. Für die Dicke des Laserstrahls im Fokusbereich gilt also folgende Formel:

$$d \propto \frac{\lambda}{NA}$$

Bei einem Laserstrahl, der kein gaußförmiges Profil aufweist bzw. der eine Beugungsmaßzahl $M^2$ größer 1 aufweist, ist die minimale Dicke im Fokusbereich bzw. die Strahltaille im Fokusbereich zusätzlich proportional zu der Beugungsmaßzahl gemäß folgender Formel:

$$d \propto \frac{\lambda}{NA} \cdot M^2$$

Es zeigt sich also, dass Laserstrahlung desto schlechter zu fokussieren ist, je größer die Beugungsmaßzahl ist. Es soll an dieser Stelle angemerkt werden, dass die Beugungsmaßzahl $M^2$ hinsichtlich zweier zu der Ausbreitungsrichtung der Laserstrahlung senkrechter Richtungen unterschiedlich groß sein kann. In diesem Fall wird unterschieden zwischen der Beugungsmaßzahl $M_x^2$ hinsichtlich einer ersten, beispielsweise mit x bezeichneten Richtung und der Beugungsmaßzahl $M_y^2$ hinsichtlich einer zweiten, beispielsweise mit y bezeichneten Richtung, die zu der ersten Richtung x senkrecht ist. Es besteht also durchaus die Möglichkeit, dass die Beugungsmaßzahl $M_x^2$ größer oder kleiner ist als die Beugungsmaßzahl $M_y^2$.

Es soll an dieser Stelle angemerkt werden, dass Halbleiterlaser, insbesondere Laserdiodenbarren, hinsichtlich der sogenannten Fast-Axis-Richtung, das heißt hinsichtlich der Richtung senkrecht zur aktiven Schicht, eine Beugungsmaßzahl $M_y^2$ von 1 oder unwesentlich größer als 1 aufweisen. Hinsichtlich der dazu senkrechten sogenannten Slow-Axis-Richtung, das heißt der Richtung parallel zur aktiven Schicht, ist die Beugungsmaßzahl $M_x^2$ deutlich größer, beispielsweise größer als 100. Ein Halbleiterlaser wird somit nicht als Laserlichtquelle einer gattungsgemäßen Vorrichtung angesehen.

Weiterhin wird im Stand der Technik Laserstrahlung vor der Fokussierung in eine Arbeitsebene regelmäßig homogenisiert. Dies geschieht beispielsweise mit Linsenarrays, die eine Vielzahl von Linsen aufweisen, so dass die Laserstrahlung durch diese Linsen in eine Vielzahl von Teilstrahlen aufgespalten werden, die in der Arbeitsebene überlagert werden. Allerdings zeigt es sich, dass die Anzahl der Teilstrahlen nicht beliebig erhöht werden kann, weil bei einer zu großen Anzahl von Teilstrahlen bei entsprechender Überlagerung der Teilstrahlen in der Arbeitsebene Hochfrequenzoszillationen durch die Interferenz zwischen den Strahlen hervorgerufen werden. Dies würde zu einer Verschlechterung der Strahlqualität in der Arbeitsebene führen. Das Kriterium für das Auftreten dieser Hochfrequenzoszillationen ist die räumliche Kohärenz der Laserstrahlung in einer Richtung senkrecht zur Ausbreitungsrichtung. Je schlechter diese räumliche Kohärenz ist, in eine desto größere Anzahl von Teilstrahlen kann das Licht aufgespalten werden, ohne dass es bei der Überlagerung zu Hochfrequenzoszillationen kommt. Unter gewissen Umständen kann auch die erwähnte Beugungsmaßzahl $M^2$ beziehungsweise $M_x^2$ oder $M_y^2$ ein Hinweis auf die räumliche Kohärenz sein, so dass bei großer Beugungsmaßzahl unter Umständen eine Aufteilung in eine große Anzahl von Teilstrahlen möglich ist.

Das der vorliegenden Erfindung zugrunde liegende Problem ist die Schaffung eine Vorrichtung der eingangs genannten Art, mittels der Laserstrahlung besser in einen linienartigen Fokusbereich fokussiert werden kann und/oder besser homogenisiert werden kann.

Dies wird erfindungsgemäß durch eine Vorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die Strahltransformationsmittel derart in der Vorrichtung angeordnet sind, dass sie die von der Laserlichtquelle emittierte Laserstrahlung oder Teilstrahlen der von der Laserlichtquelle emittierten Laserstrahlung derart transformieren können, dass die Beugungsmaßzahl hinsichtlich der ersten Richtung vergrößert und dass die Beugungsmaßzahl hinsichtlich der zweiten Richtung verkleinert wird.

Dabei können die Strahltransformationsmittel die Laserstrahlung oder Teilstrahlen der Laserstrahlung derart transformieren, dass die Beugungsmaßzahl und/oder die räumlichen Kohärenzeigenschaften hinsichtlich der ersten Richtung der Laserstrahlung oder eines jeden der Teilstrahlen mit der Beugungsmaßzahl und/oder den räumlichen Kohärenzeigenschaften hinsichtlich der zweiten Richtung vertauscht wird oder werden.

Es zeigt sich, dass auf diese Weise die Beugungsmaßzahl für eine der beiden Richtungen deutlich kleiner sein kann als vor der Strahltransformation, wohingegen die Beugungsmaßzahl für die andere der beiden Richtungen nach der Strahltransformation deutlich größer ais vor der Strahltransformation sein kann. Dies hat seinen Grund auch in der Aufteilung der Laserstrahlung in eine Mehrzahl von Teilstrahlen. Diese Aufteilung kann entweder in den Strahltransformationsmitteln oder in separaten vor den Strahltransformationsmitteln angeordneten Strahlaufteilmitteln erfolgen. Es zeigt sich, dass hierbei hinsichtlich einer der beiden Richtungen senkrecht zur Ausbreitungsrichtung die Beugungsmaßzahl verkleinert werden kann, insbesondere durch die Anzahl der Teilstrahlen dividiert werden kann.

Durch die erfindungsgemäße Vorrichtung kann erreicht werden, dass die Beugungsmaßzahl hinsichtlich einer Richtung deutlich verkleinert wird und nicht viel größer als 1 wird, wobei die Beugungsmaßzahl hinsichtlich der anderen Richtung gegenüber dem Zustand vor der Strahltransformation vergrößert wird. Falls aber durch die erfindungsgemäße Vorrichtung in einer Arbeitsebene eine sehr dünne Linie erzeugt werden soll, ist es wichtig, dass in der Richtung senkrecht zu der Längserstreckung der Linie eine sehr gute Fokussierung auf eine sehr kleine Strahltaille erfolgen kann. Bei einer sehr kleinen Beugungsmaßzahl hinsichtlich dieser Richtung lässt sich somit eine sehr dünnes linienförmiges Profil erzielen. Insbesondere kann dabei eine sehr definierte Intensitätsverteilung mit einem "top-hat"-Profil erzeugt werden. Dass dabei gleichzeitig die Beugungsmaßzahl hinsichtlich der Längserstreckung der Linie deutlich vergrößert ist, erweist sich nicht als nachteilig, da in Längsrichtung der Linie keine oder keine starke Fokussierung erwünscht ist. Im Gegenteil wird durch die Vergrößerung der Beugungsmaßzahl in der Längsrichtung der Linie in der Regel auch die räumliche Kohärenz in dieser Richtung deutlich verkleinert. Das bedeutet aber, dass zur Homogenisierung Linsenarrays mit in dieser Längsrichtung sehr vielen nebeneinander angeordneten Linsen verwendet werden können, ohne dass es zu unerwünschten Interferenzeffekten wie Hochfrequenzoszillationen in der Arbeitsebene kommt. Durch die erfindungsgemäße Vorrichtung kann somit zusätzlich eine bessere Homogenität in Längsrichtung der Linie erzielt werden.

Es besteht die Möglichkeit, dass die Strahltransformationsmittel die Laserstrahlung beziehungsweise die einzelnen Teilstrahlen um die Ausbreitungsrichtung der Laserstrahlung um einen Winkel ungleich 0°, insbesondere 90°, drehen können. Alternativ dazu können die Strahltransformationsmittel die einzelnen Teilstrahlen derart transformieren, dass der Querschnitt eines zu transformierenden Teilstrahls in einen Querschnitt überführt wird, der gegenüber dem Querschnitt des zu transformierenden Teilstrahls an einer zu der Ausbreitungsrichtung der Laserstrahlung parallelen Ebene gespiegelt erscheint. Durch beide Ausführungsformen der Strahltransformationsmittel lässt sich eine Vertauschung der Beugungsmaßzahl hinsichtlich der beiden zu der Ausbreitungsrichtung senkrechten Richtung erzielen.

Beispielsweise können dabei die Strahltransformationsmittel mindestens ein Zylinderlinsenarray umfassen, dessen Zylinderachsen mit der ersten Richtung und der zweiten Richtung einen Winkel von 45° einschließen. Alternativ besteht auch die Möglichkeit, zwei hintereinander angeordnete Zylinderlinsenarrays mit zueinander parallelen oder gekreuzten Zylinderlinsen zu verwenden, deren Zylinderachsen mit der ersten Richtung und der zweiten Richtung einen Winkel von 45° beziehungsweise -45° einschließen. Bei dem Hindurchtritt eines jeden der Teilstrahlen durch dieses Zylinderlinsenarray oder diese Zylinderlinsenarrays wird der Teilstrahl um 90° gedreht bzw. an einer zu der Ausbreitungsrichtung parallelen Ebene gespiegelt.

Derartige Strahltransformationsmittel sind als solche aus dem Stand der Technik bekannt, beispielsweise aus der EP 1 006 382 A1, der EP 1 617 275 A1 und aus der EP 1 528 425 A1. Allerdings wird dort die sehr inhomogene Laserstrahlung eines Halbleiterlasers mit sehr kleiner Beugungsmaßzahl $M_y^2$ der Fast-Axis-Richtung und sehr großer Beugungsmaßzahl $M_x^2$ der Slow-Axis-Richtung derart transformiert, dass die Laserstrahlung nach der Strahltransformation und entsprechender Kollimation eine vergleichbare Strahlqualität in beiden Richtungen aufweist. Bei der vorliegenden Erfindung werden die an sich bekannten Strahltransformationsmittel für den gegenteiligen Effekt genutzt. Laserstrahlung, die vor der Transformation nicht sehr unterschiedliche oder zumindest annähernd gleich große Beugungsmaßzahlen $M_y^2$ beziehungsweise $M_x^2$ hinsichtlich beider Richtungen aufweist, wird derart transformiert, dass sich nach der Strahltransformation die Beugungsmaßzahl hinsichtlich einer der beiden Richtungen deutlich von der Beugungsmaßzahl hinsichtlich der anderen der beiden Richtungen unterscheidet.

Es besteht die Möglichkeit, dass die Laserlichtquelle als Nd-YAG-Laser oder als Excimer-Laser ausgeführt ist. Dabei kann der Nd-YAG-Laser beispielsweise auf der Grundfrequenz oder frequenzverdoppelt oder verdreifacht und so weiter betrieben werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen

Fig. 1    einen schematischen Aufbau einer erfindungsgemäßen Vorrichtung;

Fig. 2a    eine Seitenansicht auf die Strahlaufteilmittel einer erfindungsgemäßen Vorrichtung;

Fig. 2b    eine Draufsicht auf die Strahlaufteilmittel gemäß Fig. 2a;

Fig. 2c    einen Querschnitt durch die Laserstrahlung nach dem Hindurchtritt durch die Strahlaufteilmittel gemäß Fig. 2a und Fig. 2b;

Fig. 3a    eine Seitenansicht der Strahltransformationsmittel der erfindungsgemäßen Vorrichtung;

Fig. 3b    eine Draufsicht auf die Strahltransformationsmittel gemäß Fig. 3a;

Fig. 3c    eine perspektivische Ansicht der Strahltransformationsmittel gemäß Fig. 3a;

Fig. 3d    einen Querschnitt durch die Laserstrahlung nach Hindurchtritt durch die Strahltransformationsmittel gemäß Fig. 3a bis Fig. 3c; Fig. 4a eine Seitenansicht auf Strahlvereinigungsmittel der erfindungsgemäßen Vorrichtung;

Fig. 4b    eine Draufsicht auf die Strahlvereinigungsmittel gemäß Fig. 4a;

Fig. 4c    einen Querschnitt durch die Laserstrahlung nach Hindurchtritt durch die Strahlvereinigungsmittel gemäß Fig. 4a und Fig. 4b;

Fig. 5a    eine Seitenansicht auf Homogenisierungs- und Fokussierungsmittel der erfindungsgemäßen Vorrichtung;

Fig. 5b    eine Draufsicht auf die Homogenisierungs- und Fokussierungsmittel gemäß Fig. 5a;

Fig. 6    einen Querschnitt durch die Laserstrahlung vor dem Hindurchtritt durch die erfindungsgemäße Vorrichtung;

Fig. 7    einen Querschnitt durch die Laserstrahlung in der Arbeitsebene beziehungsweise nach Hindurchtritt durch die erfindungsgemäße Vorrichtung;

Fig. 8    eine Seitenansicht auf Strahltransformationsmittel, Homogenisierungsmittel und eine zweite Ausführungsform von Strahlvereinigungsmitteln der erfindungsgemäßen Vorrichtung.

In einigen der Abbildungen ist zur besseren Orientierung ein kartesisches Koordinatensystem eingezeichnet.

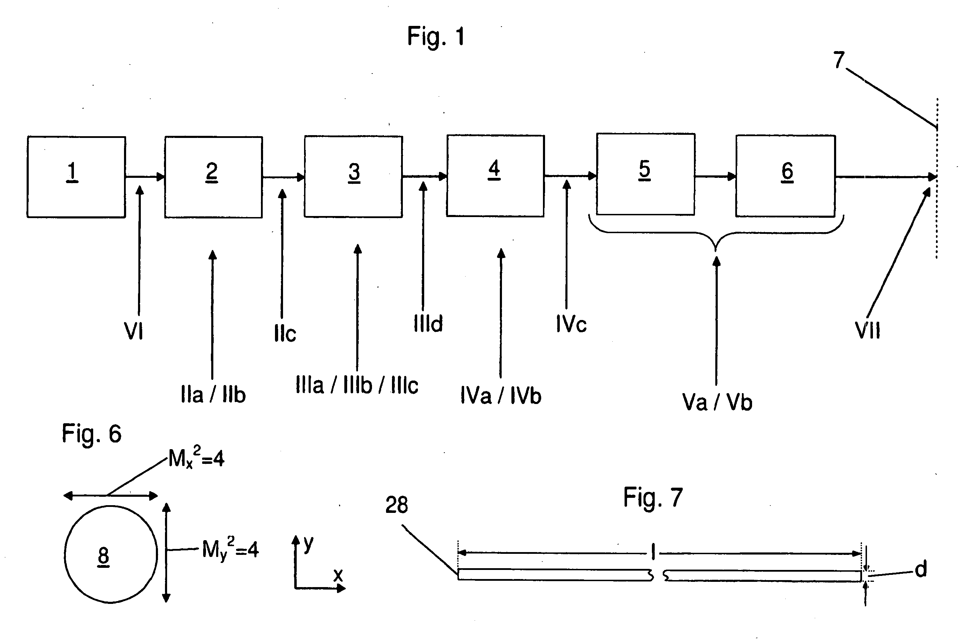

Aus Fig. 1 ist schematisch ersichtlich, dass die erfindungsgemäße Vorrichtung eine Laserlichtquelle 1 , Strahlaufteilmittel 2, Strahltransformationsmittel 3, Strahlvereinigungsmittel 4, Homogenisierungsmittel 5 und eine Linsenanordnung 6 umfasst, die in der Arbeitsebene 7 eine linienförmige Intensitätsverteilung der Laserstrahlung erzeugen kann.

Die Laserlichtquelle 1 kann beispielsweise als frequenzverdoppelter Nd-YAG-Laser oder als Excimer-Laser ausgebildet sein. In Fig. 6 ist angedeutet, dass die aus der Laserlichtquelle 1 austretende Laserstrahlung 8 beispielsweise einen kreisförmigen Querschnitt aufweist. Weiterhin ist in Fig. 6 angedeutet, dass die Laserstrahlung 8 sowohl in x-Richtung als auch in y-Richtung eine Beugungsmaßzahl $M_x^2 = M_y^2 = 4$ aufweist.

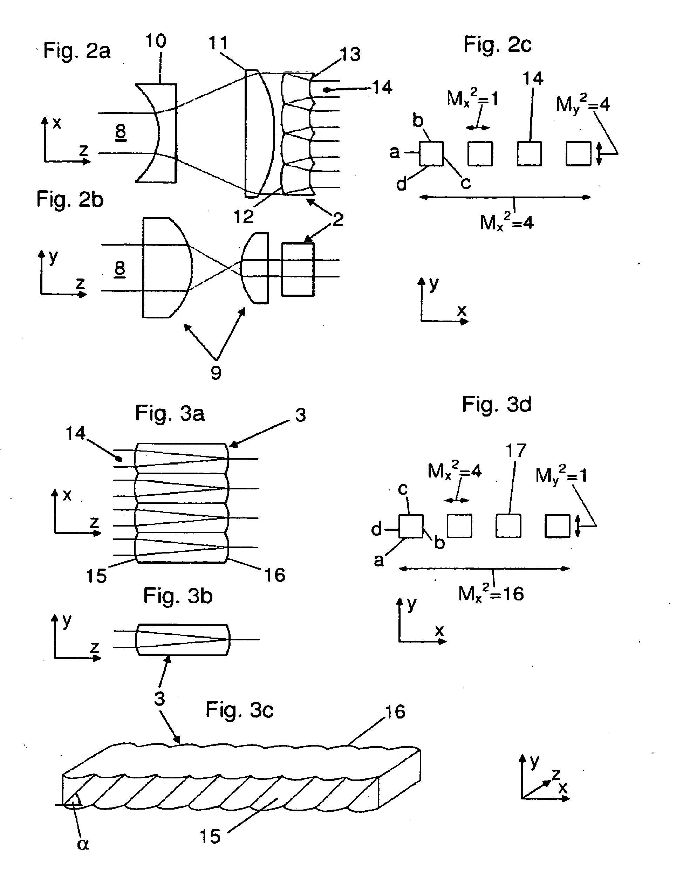

Die Strahlaufteilmittel 2 sind aus Fig. 2a und Fig. 2b detailliert ersichtlich. Den Strahlaufteilmitteln 2 ist ein Teleskop 9 aus gekreuzten zweiseitigen Zylinderlinsen 10 und 11 vorgeschaltet. Das Teleskop 9 weitet die Laserstrahlung 8 hinsichtlich der x-Richtung auf und verengt die Laserstrahlung 8 hinsichtlich der y-Richtung (siehe dazu Fig. 2a und Fig. 2b).

Die Strahlaufteilmittel 2 sind als Zylinderlinsenarray ausgebildet, wobei sich die Zylinderachsen des Zylinderlinsenarrays in y-Richtung erstrecken. Insbesondere ist ein Array von konvexen Zylinderflächen 12 auf der Eintrittsfläche und ein Array von konkaven Zylinderflächen 13 auf der Austrittsfläche der Strahlaufteilmittel vorgesehen. Durch entsprechende Wahl der Brennweiten dieser Zylinderflächen und durch entsprechende Wahl ihres Abstandes kann erreicht werden, dass aus den Strahlaufteilmitteln 2 vier in x-Richtung voneinander beabstandete Teilstrahlen 14 austreten. Fig. 2c zeigt, dass diese Teilstrahlen 14 einen quadratischen Querschnitt aufweisen.

Es besteht durchaus die Möglichkeit mehr oder weniger als vier Zylinderflächen 12, 13 vorzusehen, so dass mehr oder weniger als vier Teilstrahlen 14 entstehen. Beispielsweise können acht oder dreizehn Zylinderflächen 12, 13 vorgesehen werden.

Fig. 2c lässt sich weiterhin entnehmen, dass jeder einzelne der Teilstrahlen 14 in x-Richtung eine Beugungsmaßzahl $M_x^2 = 1$ und in y-Richtung eine Beugungsmaßzahl $M_y^2 = 4$ aufweist. Insgesamt ergibt sich somit für die x-Richtung für alle vier Teilstrahlen 14 zusammen eine Beugungsmaßzahl $M_x^2 = 4$.

Die auf diese Weise in einzelne Teilstrahlen 14 aufgeteilte Laserstrahlung tritt in die Strahltransformationsmittel 3 ein, die aus Fig. 3a bis Fig. 3c ersichtlich sind. Die Strahltransformationsmittel 3 umfassen ebenfalls ein Zylinderlinsenarray mit einem Array von konvexen Zylinderflächen 15 auf der Eintrittsfläche und einem Array von konvexen Zylinderflächen 16 auf der Austrittsfläche der Strahltransformationsmittel 3. Die Zylinderachsen der Zylinderflächen 15, 16 sind dabei unter einem Winkel $\alpha$ = 45° zur y-Richtung bzw. zur x-Richtung geneigt. Bei dem Hindurchtritt durch die Strahltransformationsmittel 3 werden die einzelnen Teilstrahlen 14 derart transformiert, dass sie an einer Ebene gespiegelt erscheinen, die parallel zur Ausbreitungsrichtung z ist: In Fig. 2c und Fig. 3d ist angedeutet, wie die Teilstrahlen 14 in transformierte Teilstrahlen 17 umgewandelt werden. Dabei ist jeweils der in Fig. 2c linke Teilstrahl 14 bzw. in Fig. 3d linke Teilstrahl 17 an jeder seiner Seiten mit einem Buchstaben a, b, c, d versehen. Es zeigt sich, dass eine Vertauschung dieser Buchstaben a, b, c, d nach einem Muster stattfindet, das einer Spiegelung an einer Diagonalfläche dieser Teilstrahlen 14, 17 entspricht. Man könnte diese Transformation auch als Drehung um die z-Richtung um 90° mit anschließender Vertauschung der Seiten a, c bezeichnen.

Aus Fig. 3d ist ersichtlich, dass die Beugungsmaßzahl der Teilstrahlen 17 unterschiedlich ist zu derjenigen der Teilstrahlen 14. Insbesondere ist bei einem jeden der Teilstrahlen 17 die Beugungsmaßzahl $M_x^2$ gleich 4 für die x-Richtung und die Beugungsmaßzahl $M_y^2$ gleich 1 für die y-Richtung. Insgesamt ergibt sich somit für die x-Richtung für alle vier Teilstrahlen 17 zusammen eine Beugungsmaßzahl $M_x^2$ gleich 16.

Nach dem Hindurchtritt durch die Strahltransformationsmittel 3 treffen die einzelnen Teilstrahlen 17 auf die Strahlvereinigungsmittel 4. Die Strahlvereinigungsmittel 4 sind entsprechend den Strahlaufteilmitteln 2 durch ein Array von konkaven Zylinderflächen 18 auf der Eintrittsfläche und ein Array von konvexen Zylinderflächen 19 auf der Austrittsfläche der Strahlvereinigungsmittel 4 ausgebildet. Im Anschluss an die Strahlvereinigungsmittel 4 ist ein weiteres Teleskop 20 in den Strahlengang eingebracht, das über entsprechend angeordnete Zylinderlinsen 21, 22 den Strahl in y-Richtung aufweitet.

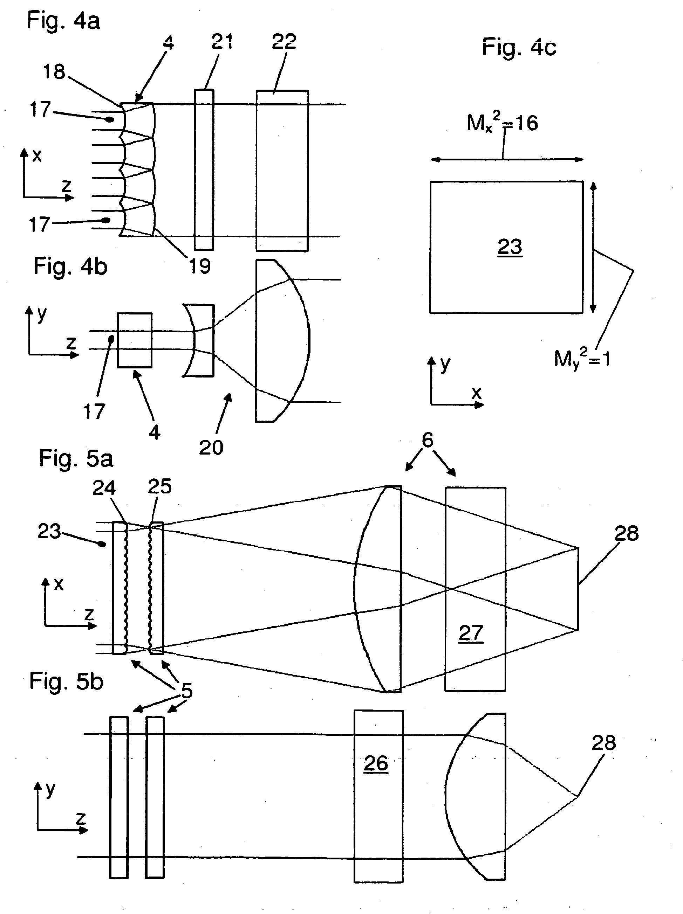

Fig. 4c zeigt den Querschnitt der Laserstrahlung 23 nach Hindurchtritt durch die Strahlvereinigungsmittel 4 und das Teleskop 20. Es zeigt sich, dass die Laserstrahlung 23 ein einzelner Laserstrahl mit einem quadratischen Querschnitt ist. Insbesondere ist dabei die Beugungsmaßzahl $M_x^2$ gleich 16 für die x-Richtung und die Beugungsmaßzahl $M_y^2$ gleich 1 für die y-Richtung.

Diese Laserstrahlung 23 tritt durch die Homogenisierungsmittel 5 hindurch (siehe Fig. 5a und Fig. 5b), die als zwei hintereinander angeordnete Arrays von Zylinderlinsen 24, 25 ausgebildet sind. Dabei sind die Arrays von Zylinderlinsen 24, 25 etwa im Abstand der Brennweite der Zylinderlinsen in z-Richtung zueinander angeordnet. Aufgrund der Strahltransformation und der damit verbundenen Vergrößerung der Beugungsmaßzahl $M_x^2$ von 4 auf 16 können in x-Richtung bis zu 16 Zylinderlinsen 24, 25 nebeneinander angeordnet werden, ohne dass unerwünschte Interferenzeffekte in der Arbeitsebene 7 auftreten.

Nach Hindurchtritt durch die Homogenisierungsmittel 5 tritt die Laserstrahlung durch die Linsenanordnung 6 hindurch, die als zwei voneinander beabstandete Zylinderlinsen 26, 27 ausgebildet ist, wobei sich die Zylinderachse der Zylinderlinse 26 in y-Richtung erstreckt und die Zylinderachse der Zylinderlinse 27 in x-Richtung erstreckt. Durch die Linsenanordnung 6 wird nicht nur die Laserstrahlung so fokussiert, dass in der Arbeitsebene 7 eine linienförmige Intensitätsverteilung 28 entsteht (siehe Fig. 7), sondern es werden auch einzelne Teile der Laserstrahlung, die aufgrund der Zylinderlinsen 24, 25 in unterschiedliche und/oder gleiche Richtungen propagieren, in der Arbeitsebene 7 überlagert. Dies ist das an sich bekannte Prinzip zur Homogenisierung mit Zylinderlinsenarrays und anschließenden Linsen, die als Feldlinsen dienen und die Laserstrahlung in einer Arbeitsebene überlagern. Die Linsenanordnung 6 dient somit als Fokussiermittel und trägt zur Homogenisierung bei.

Die linienförmige Intensitätsverteilung 28 in der Arbeitsebene 7, ist beispielhaft aus Fig. 7 ersichtlich. Diese linienförmige Intensitätsverteilung 28 ist dabei schematisch dargestellt und kann eine Länge I zwischen 10 mm und 1000 mm, beispielweise von etwa 100 mm und eine Dicke d zwischen 1 $\mu$m und 100 $\mu$m, beispielsweise von etwa 10 $\mu$m aufweisen. Es zeigt sich also, dass mit der erfindungsgemäßen Vorrichtung auch bei Verwendung einer MultiMode-Laserlichtquelle ein Fokusbereich mit einer sehr geringen Dicke und gegebenenfalls auch einer größeren Schärfentiefe erzeugt werden kann. Es besteht durchaus die Möglichkeit, die Dicke der Intensitätsverteilung 28 kleiner als 10 $\mu$m zu gestalten. Dies ist beispielsweise abhängig von der numerischen Apertur der verwendeten Linse.

In Y-Richtung, das heißt in der Richtung senkrecht zur Längserstreckung der linienförmigen Intensitätserteilung 28 kann die Laserstrahlung eine Gauß-Verteilung oder eine Top-Hat-Verteilung oder eine beliebige andere Verteilung aufweisen.

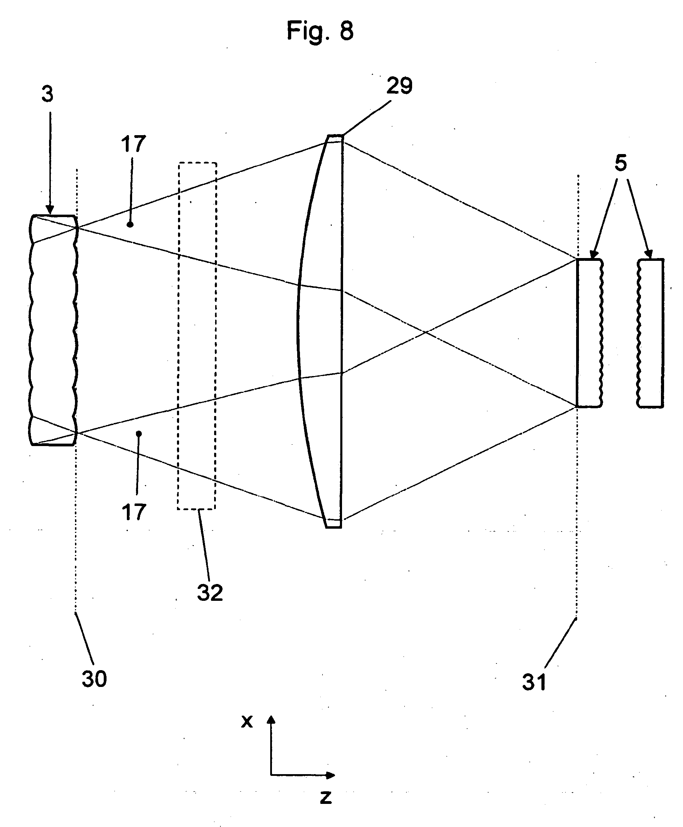

Fig. 8 zeigt eine weitere Ausführungsform der Strahlvereinigungsmittel. Diese Strahlvereinigungsmittel umfassen Linsenmittel 29, die als Fourierlinse oder Fourierlinsen dienen. Das bedeutet, dass die Ausgangsebene 30 der Strahltransformationsmittel 3 in der eingangsseitigen Fourierebene beziehungsweise Brennebene der Linsenmittel 29 angeordnet ist und dass die Eingangsebene 31 der Homogenisierungsmittel 5 in der ausgangsseitigen Fourierebene beziehungsweise Brennebene der Linsenmittel 29 angeordnet ist. Es findet also eine Fouriertransformation der Intensitätsverteilung in der Ausgangsebene 30 der Strahltransformationsmittel 3 in die Eingangsebene 31 der Homogenisierungsmittel 5 statt.

Gleichzeitig werden die einzelnen Teilstrahlen 17, von denen in Fig. 8 zwei eingezeichnet sind, in der Eingangsebene 31 der Homogenisierungsmittel 5 miteinander überlagert. Aufgrund der Tatsache, dass dabei jeder der einzelnen Teilstrahlen 17 aus einer unterschiedlichen Richtung in die Eingangsebene 31 einfällt, kann die Anzahl der Zylinderlinsen 24, 25 der Homogenisierungsmittel 5 reduziert werden, insbesondere um einen Faktor, der der Anzahl der Teilstrahlen 17 und damit der Anzahl der Zylinderflächen 16 der Strahltransformationsmittel 3 entspricht.

Die Linsenmittel 29 können als einzelne Linse oder als Mehrzahl von Linsen ausgebildet sein. Wenn die Linsenmittel 29 durch eine Mehrzahl von Linsen gebildet sind, sind diese so in der Vorrichtung angeordnet, dass die Ausgangsebene 30 der Strahltransformationsmittel 3 in der eingangsseitigen System-Brennebene der Linsenmittel 29 angeordnet und dass die Eingangsebene 31 der Homogenisierungsmittel 5 in der ausgangsseitigen System-Brennebene der Linsenmittel 29 angeordnet ist.

Weiterhin kann die Linse oder können die Linsen der Linsenmittel 29 als Zylinderlinse ausgebildet sein, deren Zylinderachse sich in Y-Richtung erstreckt.

In Fig. 8 sind gestrichelt Linsenmittel 32 zur Kollimierung der Laserstrahlung hinsichtlich der Y-Richtung eingezeichnet. Diese Linsenmittel 32 sind optional und können zwischen den Strahltransformationsmitteln 3 und den Linsenmitteln 29 angeordnet sein. Die Linsenmittel 32 können als einzelne Linse oder als Mehrzahl von Linsen ausgebildet sein. Weiterhin kann die Linse oder können die Linsen der Linsenmittel 32 als Zylinderlinse ausgebildet sein, deren Zylinderachse sich in X-Richtung erstreckt.

**Patentansprüche**

1. Vorrichtung zur Strahlformung, insbesondere zur Erzeugung einer linienförmigen Intensitätsverteilung (28) in einer Arbeitsebene, umfassend

    - eine Laserlichtquelle (1), die eine Multi-Mode-Laserstrahlung (8) emittieren kann, bei der sowohl die Beugungsmaßzahl ($M_x^2$) hinsichtlich einer ersten Richtung (x) senkrecht zur Ausbreitungsrichtung (z) der Laserstrahlung (8) größer als 4 ist, als auch die Beugungsmaßzahl ($M_y^2$)

hinsichtlich einer zweiten Richtung (y) senkrecht zur Ausbreitungsrichtung (z) größer als 4 ist, sowie
    - Strahltransformationsmittel (3),
    **dadurch gekennzeichnet, dass** die Strahltransformationsmittel (3) derart in der Vorrichtung angeordnet sind, dass sie die von der Laserlichtquelle (1) emittierte Laserstrahlung (8) oder Teilstrahlen (14) der von der Laserlichtquelle (1) emittierten Laserstrahlung (8) derart transformieren können, dass die Beugungsmaßzahl ($M_x^2$) hinsichtlich der ersten Richtung (x) vergrößert und dass die Beugungsmaßzahl ($M_y^2$) hinsichtlich der zweiten Richtung (y) verkleinert wird.

2. Vorrichtung nach Anspruch 1, **dadurch gekennzeichnet, dass** die Strahltransformationsmittel (3) die Laserstrahlung (8) oder Teilstrahlen (14) der Laserstrahlung (8) derart transformieren können, dass die Beugungsmaßzahl ($M_x^2$) und/oder die räumlichen Kohärenzeigenschaften hinsichtlich der ersten Richtung (x) der Laserstrahlung (8) oder eines jeden der Teilstrahlen (14) mit der Beugungsmaßzahl ($M_y^2$) und/oder den räumlichen Kohärenzeigenschaften hinsichtlich der zweiten Richtung (y) vertauscht wird oder werden.

3. Vorrichtung nach Anspruch 2, **dadurch gekennzeichnet, dass** die Strahltransformationsmittel (3) die Laserstrahlung (8) beziehungsweise die einzelnen Teilstrahlen (14) um die Ausbreitungsrichtung (z) der Laserstrahlung (8) um einen Winkel ungleich 0°, insbesondere 90°, drehen können.

4. Vorrichtung nach Anspruch 2, **dadurch gekennzeichnet, dass** die Strahltransformationsmittel (3) die Laserstrahlung (8) beziehungsweise die einzelnen Teilstrahlen (14) derart transformieren können, dass der Querschnitt eines zu transformierenden Teilstrahls (14) in einen Querschnitt überführt wird, der gegenüber dem Querschnitt des zu transformierenden Teilstrahls (14) an einer zu der Ausbreitungsrichtung (z) der Laserstrahlung (8) parallelen Ebene gespiegelt erscheint.

5. Vorrichtung nach einem der Ansprüche 1 bis 4, **dadurch gekennzeichnet, dass** die Strahltransformationsmittel (3) mindestens ein Zylinderlinsenarray umfassen, dessen Zylinderachsen mit der ersten Richtung (x) und der zweiten Richtung (y) einen Winkel ($\alpha$) von 45° einschließen.

6. Vorrichtung nach einem der Ansprüche 1 bis 5, **dadurch gekennzeichnet, dass** die Vorrichtung Strahlaufteilmittel (2) zur Aufteilung der Laserstrahlung (8) in eine Mehrzahl von Teilstrahlen (14) umfasst.

**7.** Vorrichtung nach Anspruch 6, **dadurch gekennzeichnet, dass** die Strahltransformationsmittel (3) in Ausbreitungsrichtung (z) der Laserstrahlung (8) hinter den Strahlaufteilmitteln (2) angeordnet sind.

**8.** Vorrichtung nach Anspruch 6, **dadurch gekennzeichnet, dass** die Strahlaufteilmittel (2) Teil der Strahltransformationsmittel (3) sind.

**9.** Vorrichtung nach einem der Ansprüche 6 bis 8, **dadurch gekennzeichnet, dass** die Strahlaufteilmittel (2) mindestens ein Zylinderlinsenarray umfassen.

**10.** Vorrichtung nach einem der Ansprüche 1 bis 9, **dadurch gekennzeichnet, dass** die Vorrichtung Fokussierungsmittel zur Fokussierung der Laserstrahlung (8) in eine Arbeitsebene (7) umfasst.

**11.** Vorrichtung nach einem der Ansprüche 1 bis 10, **dadurch gekennzeichnet, dass** die Vorrichtung Homogenisierungsmittel (5) für die Homogenisierung der Laserstrahlung (8) umfasst.

**12.** Vorrichtung nach Anspruch 11, **dadurch gekennzeichnet, dass** die Homogenisierungsmittel (5) mindestens ein Zylinderlinsenarray umfassen.

**13.** Vorrichtung nach einem der Ansprüche 10 bis 12, **dadurch gekennzeichnet, dass** die Vorrichtung eine Linsenanordnung (6) umfasst, die zur Fokussierung und/oder zur Homogenisierung der Laserstrahlung (8) beitragen kann.

**14.** Vorrichtung nach einem der Ansprüche 1 bis 13, **dadurch gekennzeichnet, dass** die Vorrichtung Strahlvereinigungsmittel (4) umfasst, die die einzelnen Teilstrahlen (17) nach der Transformation durch die Strahltransformationsmittel (3) zusammenfassen können.

**15.** Vorrichtung nach Anspruch 14, **dadurch gekennzeichnet, dass** die Strahlvereinigungsmittel (4) mindestens ein Zylinderlinsenarray umfassen.

**16.** Vorrichtung nach Anspruch 14, **dadurch gekennzeichnet, dass** die Strahlvereinigungsmittel Linsenmittel (29) umfassen, die derart hinter den Strahltransformationsmitteln (3) angeordnet sind, dass sie eine Fouriertransformation der Intensitätsverteilung der aus den Strahltransformationsmittein (3) austretenden Laserstrahlung (8) bewirken können.

**17.** Vorrichtung nach Anspruch 16, **dadurch gekennzeichnet, dass** die Linsenmittel (29) derart zwischen den Strahltransformationsmitteln (3) und den Homogenisierungsmitteln (5) angeordnet sind, dass sie eine Fouriertransformation der Intensitätsverteilung der Laserstrahlung (8) in der Ausgangsebene (30) der Strahltransformationsmittel (3) in die Eingangsebene (31) der Homogenisierungsmittel (5) bewirken können.

**18.** Vorrichtung nach einem der Ansprüche 16 oder 17, **dadurch gekennzeichnet, dass** die Linsenmittel (29) derart hinter den Strahltransformationsmitteln (3) angeordnet sind, dass sie die einzelnen aus den Strahltransformationsmitteln (3) austretenden Teilstrahlen (17) überlagern können, insbesondere in der Eingangsebene (31) der Homogenisierungsmittel (5).

**19.** Vorrichtung nach einem der Ansprüche 16 bis 18, **dadurch gekennzeichnet, dass** die Linsenmittel (29) eine oder mehrere Linsen umfassen, die insbesondere als Zylinderlinse oder Zylinderlinsen ausgebildet sind.

**20.** Vorrichtung nach einem der Ansprüche 1 bis 19, **dadurch gekennzeichnet, dass** die Laserlichtquelle (1) nicht als Halbleiterlaser ausgeführt ist.

**21.** Vorrichtung nach einem der Ansprüche 1 bis 20, **dadurch gekennzeichnet, dass** bei der Laserstrahlung (8) der Laserlichtquelle (1) vor der Strahltransformation sowohl die Beugungsmaßzahl ($M_x^2$) hinsichtlich der ersten Richtung (x) senkrecht zur Ausbreitungsrichtung (z) der Laserstrahlung (8) größer als 6 ist, als auch die Beugungsmaßzahl ($M_y^2$) hinsichtlich der zweiten Richtung (y) senkrecht zur Ausbreitungsrichtung (z) größter als 6 ist.

**22.** Vorrichtung nach einem der Ansprüche 1 bis 21, **dadurch gekennzeichnet, dass** bei der Laserstrahlung (8) der Laserlichtquelle (1) vor der Strahltransformation die Beugungsmaßzahl ($M_x^2$) hinsichtlich der ersten Richtung (x) senkrecht zur Ausbreitungsrichtung (z) der Laserstrahlung (8) maximal zehnmal so groß, insbesondere maximal fünfmal so groß, vorzugsweise maximal doppelt so groß wie die Beugungsmaßzahl ($M_y^2$) hinsichtlich der zweiten Richtung (y) senkrecht zur Ausbreitungsrichtung (z) ist.

**23.** Vorrichtung nach einem der Ansprüche 1 bis 22, **dadurch gekennzeichnet, dass** bei der Laserstrahlung (8) der Laserlichtquelle (1) vor der Strahltransformation die Beugungsmaßzahl ($M_x^2$) hinsichtlich der ersten Richtung (x) senkrecht zur Ausbreitungsrichtung (z) der Laserstrahlung (8) gleich der Beugungsmaßzahl ($M_y^2$) hinsichtlich der zweiten Richtung (y) senkrecht zur Ausbreitungsrichtung (z) ist.

**24.** Vorrichtung nach einem der Ansprüche 1 bis 23, **dadurch gekennzeichnet, dass** die Laserlichtquelle (1) als Nd-YAG-Laser oder als Excimer-Laser ausgeführt ist.

## Claims

1. Device for beam shaping, in particular for producing a linear intensity distribution (28) in a working plane, comprising

   - a laser light source (1), which can emit a multimode laser radiation (8), in the case of which the beam quality factor ($M_x^2$) with regard to a first direction (x) perpendicular to the propagation direction (z) of the laser radiation (8) is greater than 4 and also the beam quality factor ($M_y^2$) with regard to a second direction (y) perpendicular to the propagation direction (z) is greater than 4, and also
   - beam transformation means (3),
   **characterized in that** the beam transformation means (3)
   are arranged in the device in such a way that they can transform the laser radiation (8) emitted by the laser light source (1) or partial beams (14) of the laser radiation (8) emitted by the laser light source (1) in such a way that the beam quality factor ($M_x^2$) with regard to the first direction (x) is increased and that the beam quality factor ($M_y^2$) with regard to the second direction (y) is reduced.

2. Device according to Claim 1, **characterized in that** the beam transformation means (3) can transform the laser radiation (8) or partial beams (14) of the laser radiation (8) in such a way that the beam quality factor ($M_x^2$) and/or the spatial coherence properties with regard to the first direction (x) of the laser radiation (8) or of each of the partial beams (14) is or are interchanged with the beam quality factor ($M_y^2$) and/or the spatial coherence properties with regard to the second direction (y).

3. Device according to Claim 2, **characterized in that** the beam transformation means (3) can rotate the laser radiation (8) or the individual partial beams (14) by an angle not equal to 0°, in particular 90°, about the propagation direction (z) of the laser radiation (8).

4. Device according to Claim 2, **characterized in that** the beam transformation means (3) can transform the laser radiation (8) or the individual partial beams (14) in such a way that the cross section of a partial beam (14) to be transformed is converted into a cross section which appears to be mirrored with respect to the cross section of the partial beam (14) to be transformed at a plane parallel to the propagation direction (z) of the laser radiation (8).

5. Device according to one of Claims 1 to 4, **characterized in that** the beam transformation means (3) comprise at least one cylindrical lens array, the cylinder axes of which form an angle ($\alpha$) of 45° with the first direction (x) and the second direction (y).

6. Device according to one of Claims 1 to 5, **characterized in that** the device comprises beam splitting means (2) for splitting the laser radiation (8) into a plurality of partial beams (14).

7. Device according to Claim 6, **characterized in that** the beam transformation means (3) are arranged downstream of the beam splitting means (2) in the propagation direction (z) of the laser radiation (8).

8. Device according to Claim 6, **characterized in that** the beam splitting means (2) are part of the beam transformation means (3).

9. Device according to one of Claims 6 to 8, **characterized in that** the beam splitting means (2) comprise at least one cylindrical lens array.

10. Device according to one of Claims 1 to 9, **characterized in that** the device comprises focusing means for focusing the laser radiation (8) into a working plane (7).

11. Device according to one of Claims 1 to 10, **characterized in that** the device comprises homogenizing means (5) for homogenizing the laser radiation (8).

12. Device according to Claim 11, **characterized in that** the homogenizing means (5) comprise at least one cylindrical lens array.

13. Device according to one of Claims 10 to 12, **characterized in that** the device comprises a lens arrangement (6), which can contribute to the focusing and/or to the homogenizing of the laser radiation (8).

14. Device according to one of Claims 1 to 13, **characterized in that** the device comprises beam combining means (4), which can combine the individual partial beams (17) after the transformation by the beam transformation means (3).

15. Device according to Claim 14, **characterized in that** the beam combining means (4) comprise at least one cylindrical lens array.

16. Device according to Claim 14, **characterized in that** the beam combining means comprise lens means (29) arranged downstream of the beam transformation means (3) in such a way that they can bring about a Fourier transformation of the intensity distribution of the laser radiation (8) emerging from the beam transformation means (3).

17. Device according to Claim 16, **characterized in that** the lens means (29) are arranged between the beam transformation means (3) and the homogenizing means (5) in such a way that they can bring about a Fourier transformation of the intensity distribution of the laser radiation (8) in the output plane (30) of the beam transformation means (3) into the input plane (31) of the homogenizing means (5).

18. Device according to either of Claims 16 and 17, **characterized in that** the lens means (29) are arranged downstream of the beam transformation means (3) in such a way that they can superimpose the individual partial beams (17) emerging from the beam transformation means (3), in particular in the input plane (31) of the homogenizing means (5).

19. Device according to one of Claims 16 to 18, **characterized in that** the lens means (29) comprise one or a plurality of lenses formed in particular as a cylindrical lens or cylindrical lenses.

20. Device according to one of Claims 1 to 19, **characterized in that** the laser light source (1) is not embodied as a semiconductor laser.

21. Device according to one of Claims 1 to 20, **characterized in that** in the case of the laser radiation (8) of the laser light source (1) before the beam transformation, the beam quality factor ($M_x^2$) with regard to the first direction (x) perpendicular to the propagation direction (z) of the laser radiation (8) is greater than 6, and also the beam quality factor ($M_y^2$) with regard to the second direction (y) perpendicular to the propagation direction (z) is greater than 6.

22. Device according to one of Claims 1 to 21, **characterized in that** in the case of the laser radiation (8) of the laser light source (1) before the beam transformation, the beam quality factor ($M_x^2$) with regard to the first direction (x) perpendicular to the propagation direction (z) of the laser radiation (8) is at most ten times as large, in particular at most five times as large, preferably at most twice as large, as the beam quality factor ($M_y^2$) with regard to the second direction (y) perpendicular to the propagation direction (z).

23. Device according to one of Claims 1 to 22, **characterized in that** in the case of the laser radiation (8) of the laser light source (1) before the beam transformation, the beam quality factor ($M_x^2$) with regard to the first direction (x) perpendicular to the propagation direction (z) of the laser radiation (8) is equal to the beam quality factor ($M_y^2$) with regard to the second direction (y) perpendicular to the propagation direction (z).

24. Device according to one of Claims 1 to 23, **charac-**

**terized in that** the laser light source (1) is embodied as an Nd-YAG laser or as an excimer laser.

**Revendications**

1. Dispositif de mise en forme de faisceau, notamment destiné à générer une distribution d'intensité linéaire (28) dans un plan de travail, comprenant :

- une source de lumière laser (1), qui peut émettre un rayonnement laser multimode (8), dans lequel le facteur de qualité de faisceau ($M_x^2$) par rapport à une première direction (x) perpendiculaire à la direction de propagation (z) du rayonnement laser (8) est supérieur à 4, et le facteur de qualité de faisceau ($M_y^2$) par rapport à une seconde direction (y) perpendiculaire à la direction de propagation (z) est également supérieur à 4, et
- des moyens de transformation de faisceau (3), **caractérisé en ce que** les moyens de transformation de faisceau (3) sont agencés dans le dispositif de telle manière qu'ils puissent transformer le rayonnement laser (8) émis par la source de lumière laser (1) ou des faisceaux partiels (14) du rayonnement laser (8) émis par la source de lumière laser (1) de façon à ce que le facteur de qualité de faisceau ($M_x^2$) par rapport à la première direction (x) soit augmenté et à ce que le facteur de qualité de faisceau ($M_y^2$) par rapport à la seconde direction (y) soit réduit.

2. Dispositif selon la revendication 1, **caractérisé en ce que** les moyens de transformation de faisceau (3) peuvent transformer le rayonnement laser (8) ou des faisceaux partiels (14) du rayonnement laser (8) de manière à ce que le facteur de qualité de faisceau ($M_x^2$) et/ou les propriétés de cohérence spatiales par rapport à la première direction (x) du rayonnement laser (8) ou de chacun des faisceaux partiels (14) soit ou soient échangé(s) avec le facteur de qualité de faisceau ($M_y^2$) et/ou les propriétés de cohérence spatiales par rapport à la seconde direction (Y).

3. Dispositif selon la revendication 2, **caractérisé en ce que** les moyens de transformation de faisceau (3) peuvent faire tourner le rayonnement laser (8) ou les faisceaux partiels individuels (14) autour de la direction de propagation (z) du rayonnement laser (8) d'un angle différent de 0°, notamment de 90°.

4. Dispositif selon la revendication 2, **caractérisé en ce que** les moyens de transformation de faisceau (3) peuvent transformer le rayonnement laser (8) ou les faisceaux partiels individuels (14) de manière à ce que la section transversale d'un rayon partiel (14) à transformer soit convertie en une section transversale apparaissant comme la réflexion dans un plan parallèle à la direction de propagation (z) du rayonnement laser (8) de la section transversale du rayon partiel (14) à transformer.

5. Dispositif selon l'une quelconque des revendications 1 à 4, **caractérisé en ce que** les moyens de transformation de faisceau (3) comprennent au moins un réseau de lentilles cylindriques dont les axes de cylindre incluent un angle ($\alpha$) de 45° avec la première direction (x) et la seconde direction (y).

6. Dispositif selon l'une quelconque des revendications 1 à 5, **caractérisé en ce que** le dispositif comprend des moyens de division de faisceau (2) destinés à diviser le rayonnement laser (8) en une pluralité de faisceaux partiels (14).

7. Dispositif selon la revendication 6, **caractérisé en ce que** les moyens de transformation de faisceau (3) sont disposés dans la direction de propagation (z) du rayonnement laser (8) à l'arrière des moyens de division de faisceau (2).

8. Dispositif selon la revendication 6, **caractérisé en ce que** les moyens de division de faisceau (2) constituent une partie des moyens de transformation de faisceau (3).

9. Dispositif selon l'une quelconque des revendications 6 à 8, **caractérisé en ce que** les moyens de division de faisceau (2) comprennent au moins un réseau de lentilles cylindriques.

10. Dispositif selon l'une quelconque des revendications 1 à 9, **caractérisé en ce que** le dispositif comprend des moyens de focalisation destinés à focaliser le rayonnement laser (8) dans un plan de travail (7).

11. Dispositif selon l'une quelconque des revendications 1 à 10, **caractérisé en ce que** le dispositif comprend des moyens d'homogénéisation (5) destinés à homogénéiser le rayonnement laser (8).

12. Dispositif selon la revendication 11, **caractérisé en ce que** les moyens d'homogénéisation (5) comprennent au moins un réseau de lentilles cylindriques.

13. Dispositif selon l'une quelconque des revendications 10 à 12, **caractérisé en ce que** le dispositif comprend un agencement de lentilles (6) qui peut contribuer à la focalisation et/ou à l'homogénéisation du rayonnement laser (8).

14. Dispositif selon l'une quelconque des revendications 1 à 13, **caractérisé en ce que** le dispositif comprend des moyens de combinaison de faisceaux (4) qui peuvent combiner les faisceaux partiels individuels (17) après la transformation effectuée par les moyens de transformation de faisceau (3).

15. Dispositif selon la revendication 14, **caractérisé en ce que** les moyens de combinaison de faisceaux (4) comprennent au moins un réseau de lentilles cylindriques.

16. Dispositif selon la revendication 14, **caractérisé en ce que** les moyens de combinaison de faisceaux comprennent des moyens à lentilles (29) qui sont agencés à l'arrière des moyens de transformation de faisceau (3) de telle manière qu'une transformation de Fourier de la distribution d'intensité du rayonnement laser (8) émanant des moyens de transformation de faisceau (3) puisse se produire.

17. Dispositif selon la revendication 16, **caractérisé en ce que** les moyens à lentilles (29) sont agencés entre les moyens de transformation de faisceau (3) et les moyens d'homogénéisation (5) de telle manière qu'une transformation de Fourier de la distribution d'intensité du rayonnement laser (8) dans le plan de sortie (30) des moyens de transformation de faisceau (3) puisse se produire dans le plan d'entrée (31) des moyens d'homogénéisation (5).

18. Dispositif selon l'une des revendications 16 ou 17, **caractérisé en ce que** les moyens à lentilles (29) sont agencés à l'arrière des moyens de transformation de faisceau (3) de manière à ce que les faisceaux partiels (17) individuels émanant des moyens de transformation de faisceau (3) puissent se superposer, notamment dans le plan d'entrée (31) des moyens d'homogénéisation (5).

19. Dispositif selon l'une quelconque des revendications 16 à 18, **caractérisé en ce que** les moyens à lentilles (29) comprennent une ou plusieurs lentilles qui sont notamment réalisées sous la forme d'une lentille cylindrique ou de lentilles cylindriques.

20. Dispositif selon l'une quelconque des revendications 1 à 19, **caractérisé en ce que** la source de lumière laser (1) n'est pas réalisée sous la forme d'un laser à semi-conducteur.

21. Dispositif selon l'une quelconque des revendications 1 à 20, **caractérisé en ce que**, pour le rayonnement laser (8) de la source de lumière laser (1), avant la transformation de faisceau, le facteur de qualité de faisceau ($M_x^2$) par rapport à la première direction (x) perpendiculairement à la direction de propagation (z) du rayonnement laser (8) est supérieur à 6, et le facteur de qualité de faisceau ($M_y^2$) par rapport à la seconde direction (y) perpendiculairement à la direction de propagation (z) est également supérieur à 6.

**22.** Dispositif selon l'une quelconque des revendications 1 à 21, **caractérisé en ce que**, pour le rayonnement laser (8) de la source de lumière laser (1), avant la transformation de faisceau, le facteur de qualité de faisceau ($M_x^2$) par rapport à la première direction (x) perpendiculairement à la direction de propagation (z) du rayonnement laser (8) est au maximum dix fois supérieur, et plus particulièrement est au maximum cinq fois supérieur et de préférence est au maximum deux fois supérieur au facteur de qualité de faisceau ($M_y^2$) par rapport à la seconde direction (y) perpendiculairement à la direction de propagation (z).

**23.** Dispositif selon l'une quelconque des revendications 1 à 22, **caractérisé en ce que**, pour le rayonnement laser (8) de la source de lumière laser (1), avant la transformation de faisceau, le facteur de qualité de faisceau ($M_x^2$) par rapport à la première direction (x) perpendiculairement à la direction de propagation (z) du rayonnement laser (8) est égal au facteur de qualité de faisceau ($M_y^2$) par rapport à la seconde direction (y) perpendiculairement à la direction de propagation (z).

**24.** Dispositif selon l'une quelconque des revendications 1 à 23, **caractérisé en ce que** la source de lumière laser (1) est réalisée sous la forme d'un laser Nd-YAG ou d'un laser à excimère.

Fig. 1

Fig. 6

Fig. 7

Fig. 2a

Fig. 2c

Fig. 2b

Fig. 3a

Fig. 3d

Fig. 3b

Fig. 3c

Fig. 4a

Fig. 4c

$M_x^2 = 16$

$M_y^2 = 1$

Fig. 4b

Fig. 5a

Fig. 5b

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5513201 A
- EP 1006382 A1
- EP 1617275 A1
- EP 1528425 A1